Europäisches Patentamt

European Patent Office

Office européen des brevets

(19)

(11) Publication number: **0 264 833 B1**

(12) **EUROPEAN PATENT SPECIFICATION**

(45) Date of publication of patent specification: **20.03.91**   (51) Int. Cl.⁵: **F16F 15/08, B60H 1/32**

(21) Application number: **87115098.3**

(22) Date of filing: **15.10.87**

(54) Mounting mechanism for compressor in an automotive air conditioning system.

(30) Priority: **17.10.86 JP 159074/86 U**
**17.12.86 JP 193020/86 U**

(43) Date of publication of application:
**27.04.88 Bulletin 88/17**

(45) Publication of the grant of the patent:
**20.03.91 Bulletin 91/12**

(84) Designated Contracting States:
**DE FR GB IT SE**

(56) References cited:
**DE-C- 1 038 416       FR-A- 1 256 690**
**FR-A- 2 291 406       JP-A-57 061 252**
**US-A- 4 370 005       US-E- 18 457**

(73) Proprietor: **SANDEN CORPORATION**
**20 Kotobuki-cho**
**Isesaki-shi Gunma, 372(JP)**

(72) Inventor: **Seiji Shimazaki**
**976 Naganuma-machi**
**Isesaki-shi Gunma 372(JP)**
Inventor: **Soichiro Imai**
**126 Nudejima-machi**
**Maebashi-shi Gunma 371(JP)**

(74) Representative: **Prüfer, Lutz H., Dipl.-Phys.**
**Harthauser Strasse 25d**
**W-8000 München 90(DE)**

## Description

This invention relates to a mounting mechanism for a compressor, and more particularly, to an improved mounting mechanism for connecting a compressor in an automotive air conditioning system with an automobile engine through a mount bracket.

A compressor which is used in an automobile air conditioning system is usually mounted on the engine of an automobile through a suitable mount bracket. A normal mounting arrangement generally comprises a projection extending radially from the housing of the compressor and at least one bracket. The bracket is fixed on the engine and the compressor is fixed on the bracket by bolts. The compressor is thus mounted on the engine through the bracket.

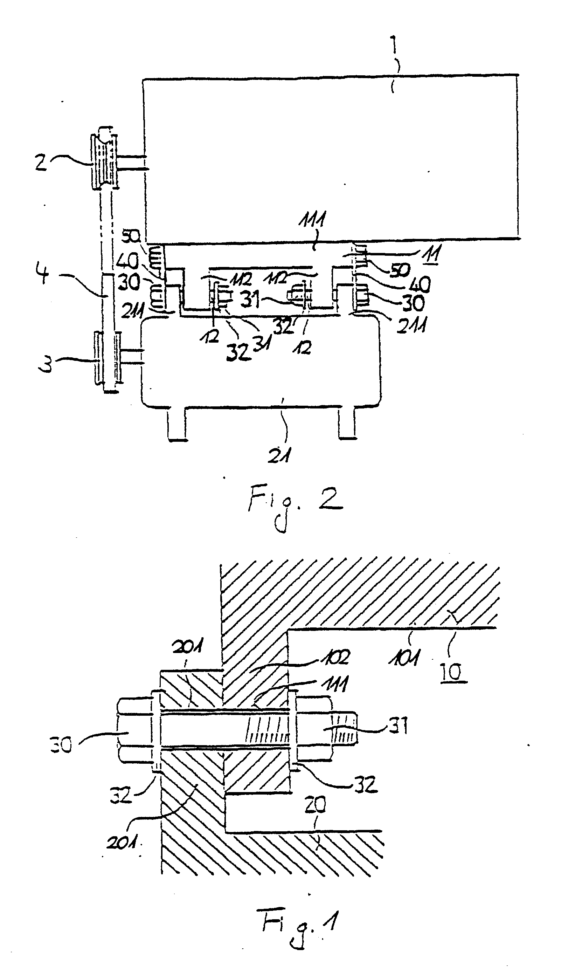

Referring to Fig. 1, which shows the main portion of conventional mounting mechanism, bracket 10 includes a base portion 101 fixed on the engine and flange portions 102 radially outwardly extending from base portion 101. A hole 102a is formed on the outer end portion of flange portion 102. A compressor 20 is also provided with a plurality of projections 201 radially outwardly extending from both end portions of a housing of the compressor 20, and a hole 201 is formed through each projection 201. One of the projections 201 and the flange portions 102 are connected by a bolt 30-nut 31 mechanism with washer-elements 32. Therefore, the compressor 20 is fixed to the engine through the bracket.

In this constrvction of the mounting arrangement, the compressor 20 and mount bracket 10 both of which are formed of high strength material are directly connected through a bolt-nut mechanism, the mechanical vibration, more specifically vibration in the axial direction, which is generated by the operation of the compressor, is thus directly transmitted to the engine, and causes heavy noise. This noise would be transmitted to the compartment of the automobile.

One solution of the above disadvantages is disclosed in Japanese Utility Model Publication No. 57-61252. In this prior art, the com-ressor is connected with the mount bracket by a bolt through a rubber member to thereby absorb the vibration of the compressor. However, the belt which is connected between the engine and the compressor should have some tension to secure the transmission of rotating. Since said tension also prestresses the elastic coupling, said coupling looses its elastic properties; thus allowing vibrations to be transmitted to the engine. Therefore due to the elastic properties of the antivibration material, the rubber member cannot obtain the tension.

It is a primary object of this invention to provide a mounting mechanism for a compressor in an automotive air conditioning system, which reduces the vibration produced in the compressor and transmitted to the engine, while at the same time securing the tension of the transmission belt and maintaining the drive shaft of the compressor in parallel to the drive shaft of the engine.

It is another object of this invention to provide a mounting mechanism for a compressor in an automotive air conditioning system, which has high durability.

This problem is solved by a mounting mechanism as indicated in claims 1 and 4.

Further objects, features and other aspects of this invention will be understood from the following detailed description of preferred embodiments of this invention with reference to the annexed drawings.

Fig. 1 is an enlarged cross-sectional view of a part of a conventional mounting mechanism for a compressor in an automotive air conditioning system.

Fig. 2 is a diagramatic view of a mounting mechanism for a compressor in an automotive air conditioning system in accordance with a first embodiment of this invention.

Fig. 3 is an enlarged cross-sectional view of a part of a mounting mechanism for a compressor in an automotive air conditioning system shown in Fig. 2.

Fig. 4 is an exploded perspective view of a mounting mechanism for a compressor in an automotive air conditioning system shown in Fig. 2.

Fig. 5 is a graph showing the relationship between the rotational speed of an automobile engine and the level of vibration for a compressor.

Fig. 6 is a front view of an attachment of a mounting mechanism for a compressor in an automotive air conditioning system in accordance with the first embodiment of this invention.

Fig. 7 is a front view of an attachment of a mounting mechanism for a compressor in an automotive air conditioning system also in accordance with the first embodiment of this invention.

Fig. 8 is an enlarged cross-sectional view of a part of a mounting mechanism for a compressor in an automotive air conditioning system in accordance with a second embodiment of this invention.

Fig. 9 is a cross-sectional view of an absorbing device taken along line A-A in Fig. 8.

Fig. 10(a) is a cross-sectional view of an absorbing device in accordance with the second embodiment of this invention.

Fig. 10(b) is a cross-sectional view taken along line B-B shown in Fig. 10(a).

Fig. 10(c) is a cross-sectional view taken along line B-B shown in Fig. 10(a).

Fig. 11(a) is a cross-sectional view of an absorbing device in accordance with the second embodiment of this invention.

Fig. 11(b) is a cross-sectional view taken along line C-C in Fig. 11(a).

Fig. 12(a) is a cross-sectional view of an absorbing device in accordance with the second embodiment of this invention.

Fig. 12(b) is a cross-sectional view taken along line D-D in Fig. 12(a).

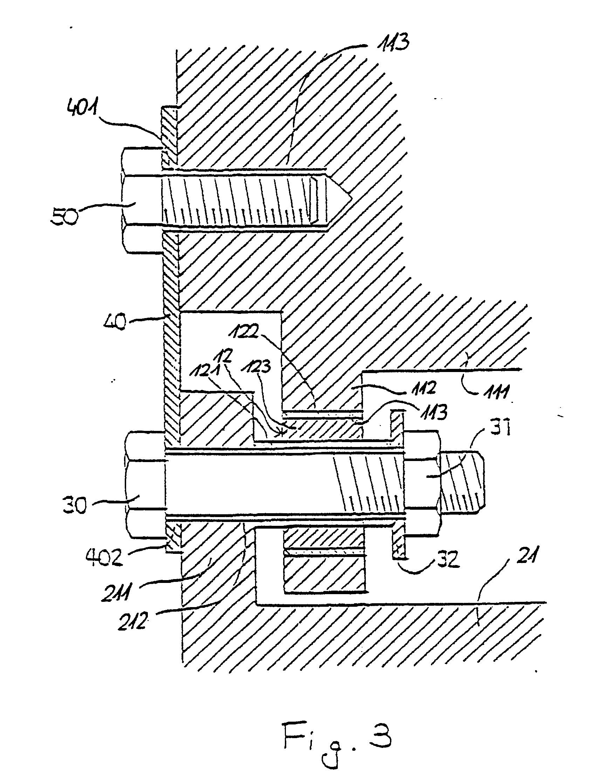

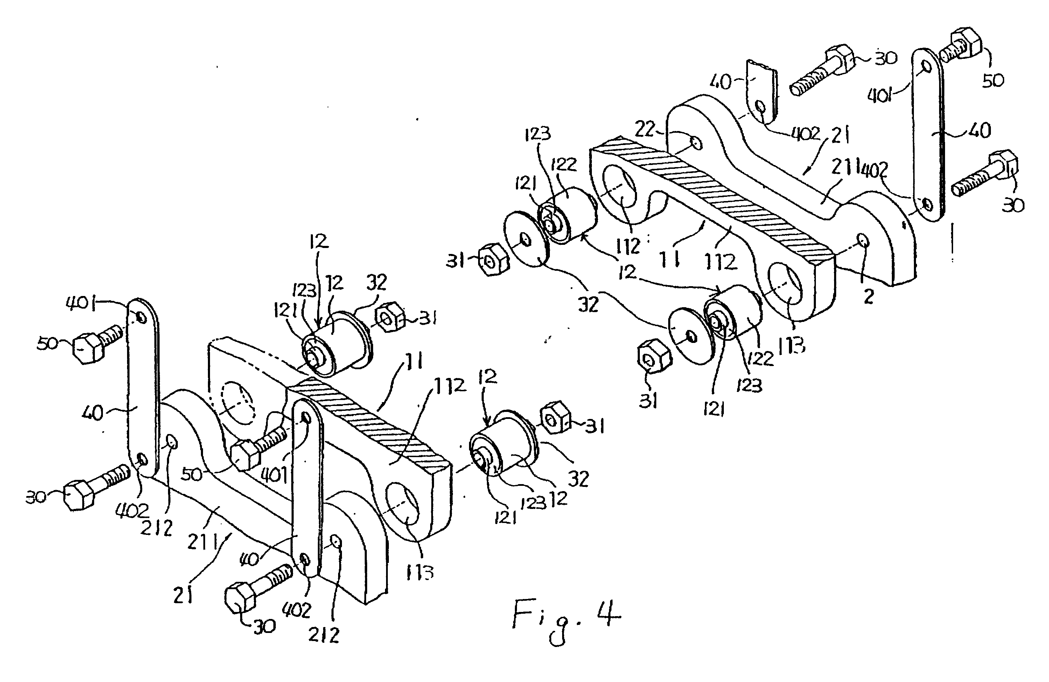

With reference to Figs. 2, 3 and 4, the construction of a mounting mechanism for a compressor in an automotive air conditioning system in accordance with one embodiment of this invention is shown. The automobile engine 1 has a pulley 2 on the terminal end of its drive shaft. The compressor 21 has also a pulley 3 on the terminal end of its drive shaft. Rotational power from the engine 1 is transmitted to the compressor 21 through a drive belt 4, which is disposed on the outer surface of the pulleys 2 and 3 thereby to connect therebetween. The compressor 21 is mounted on the automobile engine 1 through a mount bracket 11. The mount bracket 11 includes a base portion 111 affixed on the engine and a plurality of flange portions 112 radially outwardly projecting from both end portions of the base portion 111 and being perpendicular to the engine 1. A hole 113 is formed through the flange portion 112. An absorbing unit 12 is disposed in each hole 113 of the flange portion 112. An absorbing unit 12 includes inside a ring spacer 121, outside a ring spacer 122 and a cylindrical elastic member 123 made of elastic materials, such as a vibroisolating rubber. The length of the inside ring spacer 121 is longer than that of the outside ring spacer 122. The elastic member 123 is attached on the outer surface of the inside ring spacer 121 by adhesively vulcanizing and the outside ring spacer 122 is also affixed on the outer surface of the elastic member 123 by vulcanizing adhesively.

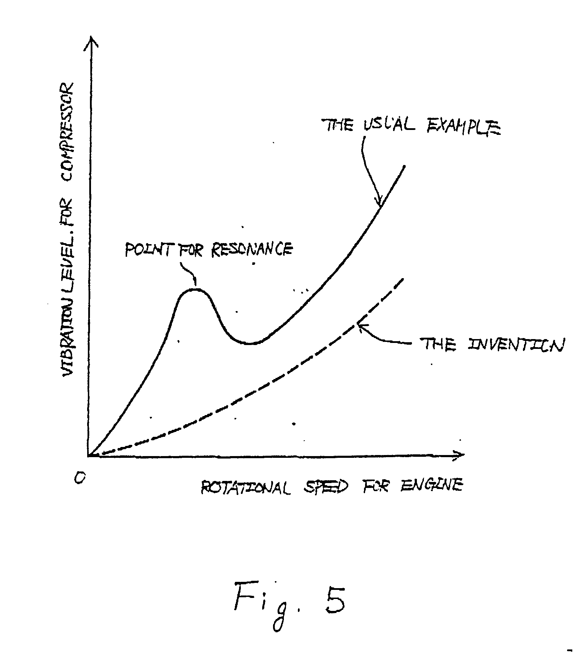

The compressor 21 has a plurality of flanges 211 radially outwardly projecting from both end portions of the housing of the compressor 21. A hole 212 is formed through each of the flanges 211. Coupling plates 40, which have holes 401, 402 at their both ends, respectively, is connected between mount bracket 11 and compressor 21. That is, each coupling plate 40 is fixed on one end surface of the mount bracket 11 by a screwing bolt 50. The other end of coupling plate 40 is fixed on the outer end surface of flanges 211 of the compressor 21 by screwing a bolt 30 and a nut 31. The coupling plate 40 is made of high strength materials, such as stainless steel or aluminum, and has characteristic for being able to bend in the axial direction of compressor 21. If the compressor 21 is assembled on the mount bracket 11, one outer end surface of the inside ring spacer 121 is attached against the side surface of the flange 211 of the compressor 21. Therefore, fixed position of the compressor is easily determined. Also, other the end surface of the inside ring spacer 211 is attached against the nut 31 through the washer 32. According to this invention, if the engine 1 starts, driving power is transmitted from the engine 1 to the compressor 21 through the belt 4, and the compressor 21 is thus driven. During operation of the compressor 21, although mechanical vibration is axially and radially produced within the compressor 21, the mechanical axial vibration which causes to be noisy in a compartment of the automobile is thus eased by the elastic member 123 of the absorbing unit 12. Therefore, the noise produced in the compartment is reduced, and thereby comfortability of the automobile is improved. Further, since the compressor 21 and the mount bracket 11 are securely connected by the coupling plate 40, which is made of materials with high strength, engine 1 and compressor 21 move together according to the condition of the mechanical radial vibration of the engine 1. Therefore, resonance between engine 1 and compressor 21 is prevented from being produced as shown in Fig. 5. and the durability of the elastic member 123 is improved. Furthermore, when the belt 4 is hung on the pulleys 2, 3, deformation of the elastic member 123 and lack of tension of the belt 4 is also prevented from being produced. Still furthermore, the compressor 21 is earthed through the coupling plate 40.

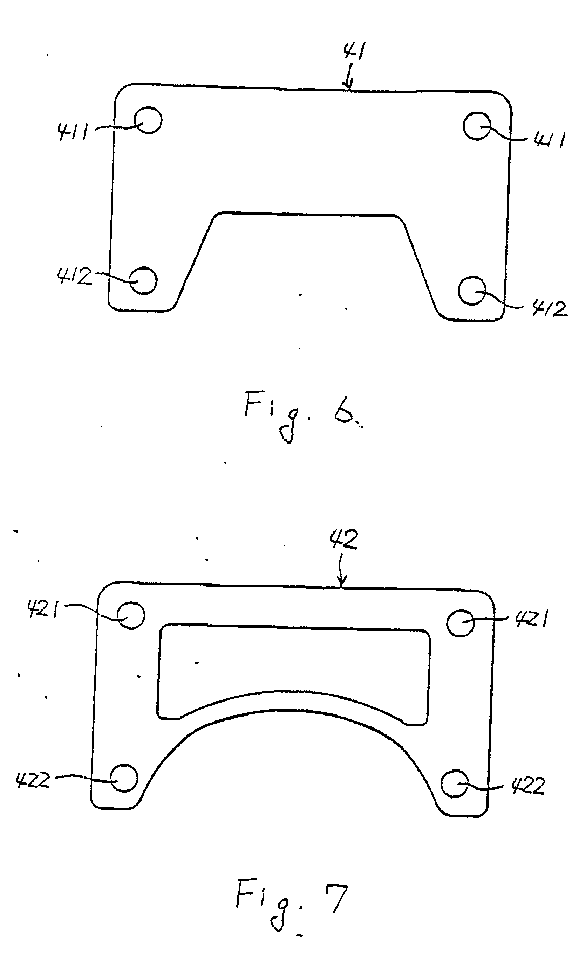

Referring to Fig. 6, the coupling plate may be formed as flat plate shape. The coupling plate 41 has two pairs of holes 411, 412 and is scooped at its bottom end to be lightweight. Holes 412 of the coupling plate 41 are preformed at the location corresponding to holes 112 of the flanges 111 of the mount bracket 11 when one end of the coupling plate 41 is fixed on one end surface of the mount bracket 11 by screwing bolts 50. Therefore, the location of the holes 412 of the coupling plate 41 relatively to the holes 112 of the flanges 111 are easily made. If the coupling plate should be more reduced in the wheight, the central portion of the plate 42 can be scooped, as shown in Fig. 7.

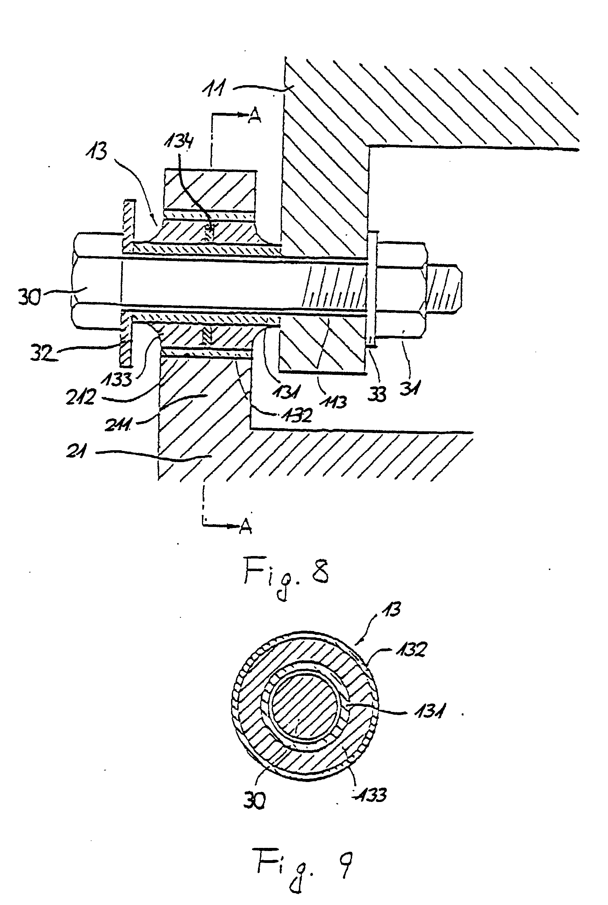

With reference to Figs. 8, 9, the construction of a mounting mechanism for a compressor in an automotive air conditioning system in accordance with a further embodiment of this invention is shown. Absorbing unit 13 includes an inside ring spacer 131, an outside ring spacer 132 and a ring plate 134 covered by an elastic member 133. The elastic member 133 is made of elastic materials, such as a vibroisolating rubber. Inside ring spacer 131, outside ring spacer 132 and ring plate 134 are made of materials with high strength, such as metals. The elastic member 133 which includes a ring plate 134 is affixed on the outer surface of the inside ring spacer 131 by vulcanizing adhesively and, the outside ring spacer 132 is also affixed on the outer surface of elastic member 133. The ring 134 is formed so that the outer surface contacts the inner surface of outside ring spacer 132 and the inner surface of the ring 134 contacts the outer surface of the inside ring spacer 131.

The absorbing unit 13 is fixedly disposed in holes 212 of flanges 211 of the compressor 21 by vulcanizing adhesive. Bolts 30 pass through the absorbing unit 13 and holes 112 of the flanges 111 of the mount bracket 11 to the compressor 21 fixed on the mount bracket 11. In this construction, since the ring 134 may accomplish the same function as the coupling plate 40 as mentioned in the above embodiments, the coupling plate 40 is not necessary.

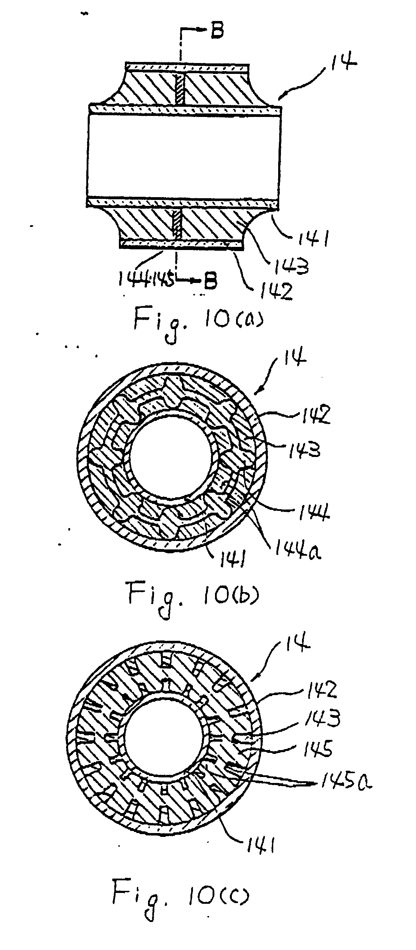

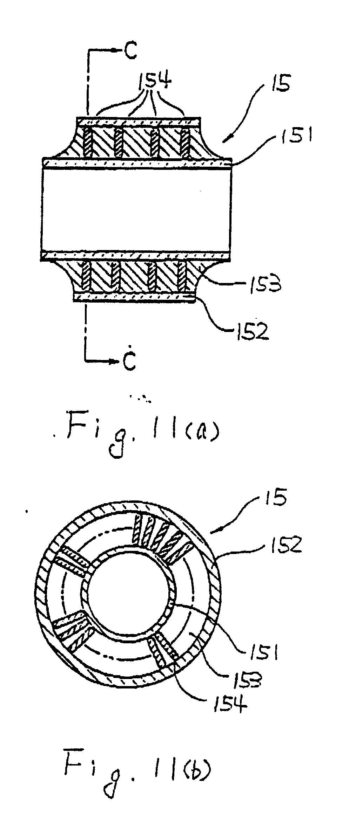

With reference to Figs. 10 (a), (b), the construction of an absorbing unit in accordance with a further embodiment of this invention is shown. The absorbing unit 14 includes an inside ring spacer 141, an outside ring spacer 142 and a ring plate 144a which is covered by an elastic member 143 therebetween. The ring plate 144 has scooped portions 144a with a regular interval therebetween along with the outer and inner circumferences thereof. Therefore, the ring plate 144 partly contacts the outer surface of the inside ring spacer 141 and the inner surface of the outside ring spacer 142 under the condition of line-contact. In this embodiment, since scooped protions 144a are formed along with the outer and inner circumferences of the ring 144, the absorbing assembly 14 may be easily bent axially. The ring plate 145 may be provided with many small scooped portions 145a with a regular interval therebetween along, with the outer and inner circumferences thereof, as shown in Fig. 10 (c). Referring to Figs. 11 (a), (b), in an absorbing assembly 15 the ring plate could be replaced with a plurality of fiber bit 154, which are covered by an elastic member 153. Each fiber bits 154 is made of materials whith high strength, for example, metal, carbon and hard plastics, and disposed with an axial and a radial regular interval between the inside ring spacer 151 and the outside ring spacer 152. The outer end surface of the fiber bit 154 thus contacts the inner surface of the outside ring spacer 152 and the inner end surface of the fiber bit 154 contacts the outer surface of the inside ring spacer 151. That is, each metal bit 154 is identical to the other. Therefore, in this embodiment, the absorbing assembly 15 may be more easily bent axially.

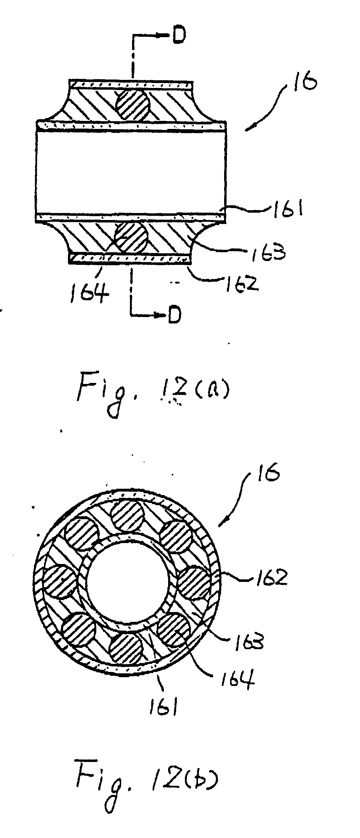

Referring to Figs. 12 (a), (b), the ring plate could be replaced with a plurality of spherical members 164, which are ccvered by an elastic member 163. Each of the spherical members 164 is disposed with a regular interval along with a circumference of an inside ring spacer 161. The diameter of each spherical member 164 equals the radial gap between the outer surface of the inside ring spacer 161 and the inner surface of the outside ring spacer 162 so that the spherical member, 164 can receive radial force. Therefore, the outer surface of the spherical members 164 contact those surfaces under the condition of point-contact. Instead of a spherical member an oval member can be used under the condition that the end surfaces of the oval member at the side of the ring diameter contact the inner surface of the outside ring spacer and the outer surface of the inside ring spacer, respectively.

## Claims

1. A mounting mechanism for connecting a compressor (21) of an automobile air conditioning system to an automobile engine (1), the drive shaft of said compressor being disposed in parallel to the drive shaft of said engine (1), including a mount bracket (11) affixed to the engine (1), a flange portion (211) projecting from a peripheral surface of said compressor (21), and a pair of bolt-nuts (30, 31) connecting said mount bracket (11) and said flange portion (211) of said compressor (21), said mount bracket (11) and flange portion (211) respectively being formed with a hole (113, 212) penetrated by said bolt (30), an absorbing unit (12) being disposed in either the hole (113, 212) on said bracket (11) or said flange portion (211) to absorb axial vibration, characterized by a coupling element (40, 41, 42) connecting said compressor (21) and said mount bracket (11) of said engine (1), said coupling element (40, 41, 42) being relatively rigid in the radial directon and relatively elastic in the axial direction of said shafts.

2. The mounting mechanism of claim 1, wherein said coupling member (40, 41, 42) is made of a conductive material.

3. The mounting mechanism of one of claims 1 to 2, wherein said coupling element (40, 41, 42) consists of at least one pair of metal plates.

4. A mounting mechanism for connecting a compressor (21) of an automobile air conditioning system to an automobile engine (1), the drive shaft of said compressor being disposed in parallel to the drive shaft of said engine (1), including a mount bracket (10) affixed to the engine (1), a flange portion (112) projecting from a peripheral surface of said compressor (21), and a pair of bolt-nuts (30, 31) connecting said mount bracket (11) and said flange portion (112) of said compressor (21), said mount bracket (11) and flange portion (112) respectively being formed with a hole (113, 212) penetrated by said bolt (30), an absorbing unit (12) being disposed in either the hole (113, 212) on said bracket (11) or said flange portion (112) to absorb axial vibration,
characterized in that said absorbing unit (13-15) is provided with a supporting element (134, 135, 136) having a relatively high rigidity in the radial direction and being relatively elastic in the axial direction of said shafts, to prevent the radial movement of said compressor (21).

5. The mounting mechanism of one of the claims 1 to 4, wherein said absorbing unit (12) comprises vibroisolating rubber.

6. The mounting mechanism of claim 5, wherein said absorbing unit comprises inside (121, 131, 141, 151, 161) and outside (122, 132, 142, 152, 162) ring spacers and an elastic member (123, 133, 143, 153, 163) disposed in a gap between the ring spacers.

7. The mounting mechanism of claim 4, wherein said supporting element (134, 135, 136) are rings formed in the form of a circle or an oval.

8. The mounting mechanism of claim 7, wherein said rings have a plurality of scooped portions with regular intervals on at least the inner or the outer circumference.

9. The mounting mechanism of claim 4, wherein said supporting element are fiber bits (154) disposed with regular intervals in the axial and radial direction.

10. The mounting mechanism of one of claims 4 to 9, wherein said supporting element are at least three spherical or oval members disposed in regular intervals.

**Revendications**

1. Mécanisme de montage pour relier un compresseur (21) d'un système de conditionnement d'air pour véhicule à un moteur d'automobile (1), l'arbre primaire dudit compresseur étant disposé en parallèle avec l'arbre primaire dudit moteur (1), comprenant un support de montage (11) fixé au moteur (1), une partie formant bride (211) se projetant à partir d'une surface périphérique dudit compresseur (21), une paire de boulons-écrous (30,31) reliant ledit support de montage (11) et ladite partie formant bride (211) dudit compresseur (21), lesdits supports de montage (11) et partie formant bride (211) étant respectivement formés avec un trou (113,212) dans lequel pénètre ledit boulon (30), une unité d'amortissement (12) étant disposée dans le trou (113,212) sur ledit support (11) ou ladite partie formant bride (211) pour absorber les vibrations axiales, caractérisé en ce qu'il possède un élément d'accouplement (40,41,42) reliant ledit compresseur (21) et ledit support de montage (11) dudit moteur (1), ledit élément d'accouplement (40,41,42) étant relativement rigide dans la direction radiale et relativement élastique dans la direction axiale desdits arbres.

2. Mécanisme de montage selon la revendication 1, caractérisé en ce que ledit élément d'accouplement (40,41,42) est fait d'un matériau conducteur.

3. Mécanisme de montage selon l'une quelconque des revendications 1 et 2, caractérisé en ce que ledit élément d'accouplement (40,41,42) consiste en au moins une paire de plaques métalliques.

4. Mécanisme de montage pour relier un compresseur (21) d'un système de conditionnement d'air pour véhicule à un moteur d'automobile (1), l'arbre primaire dudit compresseur étant disposé en parallèle avec l'arbre primaire dudit moteur (1), comprenant un support de montage (11) fixé au moteur (1), une partie formant bride (112) se projetant à partir d'une surface périphérique dudit compresseur (21), une paire de boulons-écrous (30,31) reliant ledit support de montage (11) et ladite partie formant bride (112) dudit compresseur (21), lesdits supports de montage (11) et partie formant bride (112) étant respectivement formés avec un trou (113,212) dans lequel pénètre ledit boulon (30), une unité d'amortissement (12) étant disposée dans le trou (113,212) sur ledit support (11) ou ladite partie formant bride (112) pour absorber les vibrations axiales, caractérisé en ce que ladite unité d'amortissement (13-15) est pourvue d'un élément de support (134,135,136) ayant une rigidité relativement grande dans la direction radiale et étant relativement élastique dans la direction axiale desdits arbres, pour empêcher le déplacement radial dudit compresseur (21).

5. Mécanisme de montage selon l'une quelconque des revendications 1 à 4, caractérisé en ce que ladite unité d'amortissement (12) se compose de caoutchouc isolant contre les vibrations.

6. Mécanisme de montage selon la revendication 5, caractérisé en ce que ladite unité d'amortissement comprend des bagues d'espacement intérieures (121,131,141,151,161) et extérieures (122,132,142,152,162) et un élément élastique (123,133,143,153,163) disposé dans un espace entre les bagues d'espacement.

7. Mécanisme de montage selon la revendication 4, caractérisé en ce que ledit élément de support (134,135,136) est composé d'anneaux formés en forme de cercle ou d'ovale.

8. Mécanisme de montage selon la revendication 7, caractérisé en ce que lesdits anneaux possèdent une pluralité de parties évidées à intervalles réguliers sur au moins la circonférence intérieure ou extérieure.

9. Mécanisme de montage selon 1a revendication 4, caractérisé en ce que ledit élément de support est formé de bouts de fibres (154) disposés à intervalles réguliers dans les directions axiales et radiales.

10. Mécanisme de montage selon l'une quelconque des revendications 4 à 9, caractérisé en ce que ledit élément de support est formé d'au moins trois éléments sphériques ou ovales disposés à intervalles réguliers.

**Ansprüche**

1. Montierungsmechanismus zum Verbinden eines Kompressors (21) einer Fahrzeugklimaanlage mit einem Fahrzeugmotor (1), wobei die Antriebswelle des Kompressors parallel zu der Antriebswelle des Motors vorgesehen ist, mit einem an dem Motor (1) befestigten Montierungsarm (11), einem von einer umlaufenden Oberfläche des Kompressors (21) vorstehenden Randabschnitt (211) und einem den Montierungsarm (11) und den Randabschnitt (211) des Kompressors (21) verbindenden Paar von Bolzen-Muttern (30, 31), wobei der Montierungsarm (11) bzw. Randabschnitt (211) mit einem Loch (113, 212) gebildet sind, das von dem Bolzen (30) durchstoßen ist und eine Absorbiereinheit (12) entweder in dem Loch (113, 212) in dem Arm (11) oder in dem Randabschnitt (211) zum Absorbieren axialer Vibration vorgesehen ist,
gekennzeichnet durch ein den Kompressor (21) und den Montierungsbügel (11) des Motors (1) verbindendes Kopplungselement (40, 41, 42), das relativ starr in der radialen Richtung und relativ elastisch in der axialen Richtung der Wellen ist.

2. Montierungsmechanismus nach Anspruch 1, bei dem das Kopplungselement (40, 41, 42) aus einem leitenden Material gemacht ist.

3. Montierungsmechanismus nach einem der Ansprüche 1 bis 2, bei dem das Kopplungselement (40, 41, 42) aus mindestens einem Paar von Metallplatten besteht.

4. Montierungsmechanismus zum Verbinden eines Kompressors (21) einer Fahrzeugklimaanlage mit einem Fahrzeugmotor (1), wobei die Antriebswelle des Kompressors parallel zu der Antriebswelle des Motors (1) vorgesehen ist, mit einem an dem Motor befestigten Montierungsarm (10), einem von einer umlaufenden Oberfläche des Kompressors (21) vorstehenden Randabschnitt (112) und einem den Montierungsarm (11) und den Randabschnitt (112) des Kompressors (21) verbindenden Paar von Bolzen-Muttern (30, 31), wobei der Montierungsarm (11) bzw. der Randabschnitt (112) mit einem Loch (113, 212) gebildet sind, das von dem Bolzen (30) durchstoßen ist und eine Absorbiereinheit (12) entweder in dem Loch (113, 212) in dem Arm (11) oder dem Randabschnitt (112) zum Absorbieren axialer Vibration gebildet ist.
dadurch gekennzeichnet, daß die Absorbiereinheit (13 bis 15) mit einem Unterstützungselement (134, 135, 136) zum Verhindern der radialen Bewegung des Kompressors (21) versehen ist, wobei das Unterstützungselement eine relativ hohe Festigkeit in die radiale Richtung aufweist und relativ elastisch in die axiale Richtung der Wellen ist.

5. Montierungsmechanismus nach einem der Ansprüche 1 bis 4, bei dem die Absorbiereinheit (12) einen vibrationsisolierenden Gummi aufweist.

6. Montierungsmechanismus nach Anspruch 5, bei dem die Absorbiereinheit innere (121, 131, 141, 151, 161) und äußere (122, 132, 142, 152, 162) Ringabstandsstücke und ein in einer Lükke zwischen den Ringabstandsstücken vorgesehenes elastisches Teil (123, 133, 143, 153, 163) aufweist.

7. Montierungsmechanismus nach Anspruch 4, bei dem das Unterstützungselement (134, 135, 136) aus Ringen besteht, die in der Form eines Kreises oder eines Ovales gebildet sind.

8. Montierungsmechanismus nach Anspruch 7, bei dem die Ringe eine Mehrzahl von schaufelförmigen Abschnitten mit regelmäßigen Abständen mindestens auf der inneren oder auf der äußeren umlaufenden Fläche aufweisen.

9. Montierungsmechanismus nach Anspruch 4, bei dem das Unterstützungselement aus in regelmäßigen Abständen in der axialen und der radialen Richtung vorgesehenen Fiberbits besteht.

10. Montierungsmechanismus nach einem der Ansprüche 4 bis 9, bei dem das Unterstützungselement aus drei in regelmäßigen Abständen vorgesehenen sphärischen oder ovalen Teilen besteht.

Fig. 2

Fig. 1

Fig. 3

Fig. 4

EP 0 264 833 B1

THE USUAL EXAMPLE

POINT FOR RESONANCE

THE INVENTION

VIBRATION LEVEL. FOR COMPRESSOR

ROTATIONAL SPEED FOR ENGINE

O

Fig. 5

41

411

411

412

412

Fig. 6.

42

421

421

422

422

Fig. 7

Fig. 8

Fig. 9

Fig. 10(a)

Fig. 10(b)

Fig. 10(c)

Fig. 11(a)

Fig. 11(b)

Fig. 12 (a)

Fig. 12 (b)